# EUROPEAN PATENT APPLICATION

(11) **EP 1 867 919 A1**
(43) Date of publication of application: **19.12.2007**
(21) Application number: 05806808.1
(22) Date of filing: 18.11.2005
(51) Int. Cl.: F21V 29/00, F21V 8/00, G02F 1/13357, G02B 6/00, F21Y 101/02

(54) **PLANAR LIGHTING DEVICE**

(30) Priority: 31.03.2005 JP 2005103443
(71) Applicant: MINEBEA Co., Ltd., Kitasaku-gun, Nagano-Ken 389-0293 (JP)
(72) Inventor: KAWASHIMA, Satoshi c/o Minebea Co., Ltd., Kitasaku-gun, Nagano 3890293 (JP); SATOH, Makoto c/o Minebea Co., Ltd., Nagano 3890293 (JP); JOHMEN, Hiroshi c/o Minebea Co., Ltd., Kitasaku-gun Nagano 3890293 (JP)
(74) Representative: Schaad, Balass, Menzl & Partner AG
(86) International application number: PCT/JP2005/021253
(87) International publication number: WO 2006/112072

(57) **Abstract**

A planar lighting device where workability of charging of a filling agent for heat radiation is improved and where heat produced by a point-like light source is efficiently radiated to achieve high brightness. A planar lighting device (10) has a light guide plate (2); a point-like light source (3) placed on a side end face of the light guide plate (2); and a heat radiation plate (5) having a bottom face (5a) and a side wall (5b). A circuit board (4) on which the point-like light source (3) is mounted is fixed along the side wall (5b). A recess (7) for holding a filling agent (6) for heat radiation is formed in that position of the side wall (5b) which corresponds to the point-like light source (3). As a result, determination of the amount of application of the filling agent (6) for heat radiation and management and storage after the application are facilitated, which improves charging workability.

## Description

### Technical Field

The present invention relates to a side-light-type planar lighting device and particularly to a planar lighting device used as illuminating means of a liquid crystal display device.

### Background Art

As an auxiliary light source for a liquid crystal display device used in a cell phone or the like, a side-light-type planar lighting device in which a primary light source is arranged on a side end face of a light guide plate is widely used (hereinafter, the side end face on which the primary light source is arranged is referred to as an incoming light face). As the primary light source of such a side-light-type planar lighting device, a cold cathode lamp has been used but currently, a point-like light source such as a white LED, which is more excellent in handling performance, is easier to reduce the size thereof and more excellent in impact resistance than a cold cathode lamp (hereinafter simply referred to as an LED) is used in many cases. Fields of application for this type of planar lighting device using a point-like light source are expanding and not limited to small-sized liquid crystal display devices mounted on a cell phone or the like, usage as an auxiliary light source for a liquid crystal display device used for an in-vehicle navigation system with a relatively large display size is now being discussed.

In order to improve brightness of the side-light-type planar lighting device and to respond to the expansion of the illumination area, it is preferable to increase an electric current to be supplied to each LED or the number of LEDs to be used. However, increase of the electric current to be supplied to the LED or the number of the LEDs is accompanied by increase in a heat amount generated from the LED, and there is a problem that light emission efficiency of the LED is lowered by the temperature rise. Since the heat generated from the LED is transferred to a light guide plate and the light guide plate is expanded concomitantly, displacement is caused in the point-like light source and there is also a problem that bonding efficiency between the point-like light source and the light guide plate is lowered.

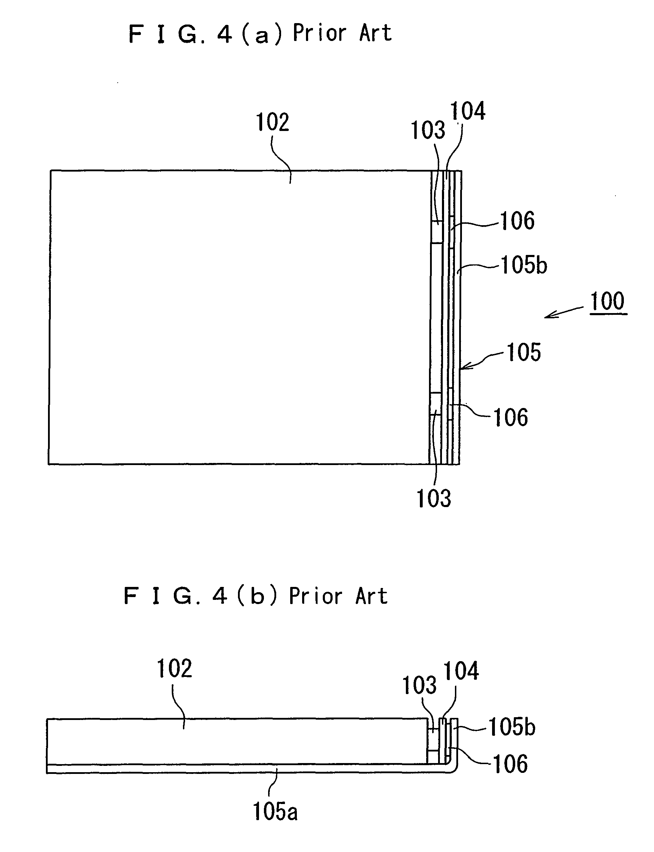

Therefore, various methods have been examined to effectively disperse the heat generated from the LED, and a planar lighting device provided with a radiator plate formed by a metal material such as aluminum having excellent heat conductivity has been proposed. Fig. 4 shows views illustrating a configuration example of such a planar lighting device, in which Fig. 4(a) is a top view and Fig. 4(b) is a side view. A planar lighting device 100 shown in Fig. 4 comprises a light guide plate 102, an LED 103 mounted on a circuit board 104 and arranged on a side end face of the light guide plate 102, and a radiator plate 105 made of a planar portion 105a and a side wall 105b, the light guide plate 102 being mounted on the planar portion 105a of the radiator plate 105, and the circuit board 104 on which the LED 103 is mounted is fixed to the side wall 105b so that heat generated from the LED 103 is efficiently radiated by the radiator plate 105.

Moreover, in the planar lighting device 100, in order to improve heat conductivity from the LED 103 to the radiator plate 105, a filler 106 for heat radiation made of a silicon compound with high heat conductivity, for example, is interposed between the circuit board 104 and the side wall 105b of the radiator plate 105. Conventionally, filling of the filler 106 for heat radiation is carried out by methods in which the filler 106 for heat radiation is applied with a dispenser or the like to a corresponding spot on the back face side of the LED 103 mounting position or the side wall 105b of the radiator plate 105 in the circuit board 104 and then, the circuit board 104 and the radiator plate 105 are fixed to each other using a double-sided adhesive tape or the like, not shown, or in which a through hole (not shown) is provided in advance at a predetermined spot of the radiator plate 105 and after the circuit board 104 on which the LED 103 is mounted and the radiator plate 105 are fixed together, the filler 106 for heat radiation is filled through the through hole and the like.

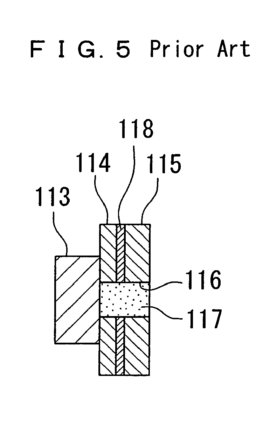

As an example of formation of the through hole in the radiator plate 105, as shown in a sectional view in Fig. 5, such a planar lighting device is proposed in which a through hole 116 is formed penetrating through both a radiator plate 115 made of a metal flat plate and a circuit board 114 on which an LED 113 is mounted, and a light source portion is provided by filling an adhesive filler 117 with high heat conductivity into the through hole 116 (See Patent Document 1, for example). Patent Document 1 describes that the light source portion is manufactured by a series of processes in which the circuit board 114 is bonded and fixed to the radiator plate 115 with an adhesive 118, the through hole 116 penetrating through the radiator plate 115 and the circuit board 114 is drilled and then, the LED 113 is mounted on the circuit board 114 and then, an adhesive filler 117 is filled into the through hole 116 and dried and solidified.

Patent Document 1: Japanese Unexamined Patent Application Publication No. 2002-162626 (claim 1, claim 3, Figs. 1 and 2)

### Disclosure of Invention

### Problems to be Solved by the Invention

However, with the planar lighting device 100 shown in Fig. 4, in the filling process of the filler 106 for heat radiation, when the circuit board 104 onto which the filler 106 for heat radiation is applied or the radiator plate 105 is temporarily stored by a subsequent process, the filler 106 for heat radiation can easily transfer and adhere to another place and moreover, particularly when the filler 106 for heat radiation is applied on the side wall 105b of the radiator plate 105, there is a problem relating to workability in that control of an appropriate application amount is difficult.

On the other hand, with the method of forming the through hole in the radiator plate 105, since the radiator plate 105 lacks a portion immediately below the LED 103, which is the central portion of heat generation, there is a problem that radiation efficiency is lowered. In this regard, in the light source portion shown in Fig. 5, the portion immediately below the LED 113 is made of the adhesive filler 117 with higher heat conductivity than the circuit substrate 114 so that the radiation characteristic is improved. However, this does not mean that the radiator plate 115 is present on the back face of the adhesive filler 117, and there is room for improvement in utilization of the radiation characteristic of the radiator plate 115. Moreover, the configuration of the light source portion shown in Fig. 5 is based on the fact that the radiator plate 115 has a simple flat-plane shape, and if this configuration is applied to the radiator plate 105 configured in an L-shape provided with the planar portion 105a and the side wall 105b as shown in Fig. 4, it becomes extremely difficult to carry out the above-mentioned series of manufacturing processes, which might incur deterioration of workability and increase manufacturing costs. With the planar lighting device in Patent Document 1, no special measures are taken to cope with displacement of the point-like light source caused by heat expansion of the light guide plate.

The present invention was made in view of the above problems and an object thereof is to provide a planar lighting device enabling improved workability of a filling process of filler for heat radiation and can achieve higher brightness by efficiently radiating heat generated from a point-like light source.

### Means for Solving the Problems

In order to achieve the above object, a planar lighting device according to present invention, provided with a light guide plate and a point-like light source arranged on a side end face of the light guide plate, comprises a radiator plate made of a bottom portion and a side wall, a circuit board on which the point-like light source is mounted is fixed along the side wall, and at a position corresponding to the point-like light source in the side wall, a recess for holding a filler for heat radiation is formed.

According to the present invention, since the recess portion for holding the filler for heat radiation is formed at a position corresponding to the point-like light source in the side wall of the radiator plate, an appropriate application amount of the filler for heat radiation can be determined easily by discriminating the application amount according to a volume of the recess portion, and since the filler for heat radiation after application is accommodated and held in the recess portion, the radiator plate can be easily managed and stored without transfer or adhesion to another place, which contributes to improvement of workability in the filling process of the filler for heat radiation.

Moreover, by providing the recess portion to be a reservoir portion for the filler for heat radiation, a filler of a type having considerable fluidity and not requiring drying and solidifying processes can be suitably used, and since such a recess portion can be formed as the lump sum at formation of the radiator plate having the bottom portion and the side wall portion by press machining or the like, the portion can be realized without increasing manufacturing costs as compared with the conventional planar lighting device.

In a mode of the present invention, the recess portion reaches up to an end of the side wall, and filling of the filler for heat radiation is enabled after fixing the circuit board to the radiator plate, which can further improve the effect of improvement in workability of the filling process. Also, since the filling amount of the filler for heat radiation can be adjusted easily, a peripheral temperature of each point-like light source and its outgoing light amount can be individually adjusted.

Here, in the present invention, the circuit board preferably has an opening in a region corresponding to at least a part of a mounting face of the point-like light source. By this arrangement, the point-like light source and the radiator plate can be bonded together, while the filler for heat radiation is in direct contact with the mounting face of the point-like light source, and at that time, in the present invention, since a portion corresponding to the point-like light source in the radiator plate is made as a recess portion without forming a through hole in the radiator plate, there is no lacking portion in the radiator plate on the back face side of the point-like light source, and heat transferred from the point-like light source to the filler for heat radiation can be radiated efficiently.

Moreover, the opening shape of the recess portion is preferably formed slightly larger than the outline of the mounting face of the point-like light source, and the circuit board preferably has flexibility. By this arrangement, even if there is variation in the height from the circuit board of the point-like light source mounted on the circuit board, the variation can be absorbed by flexural deformation of the circuit board into the recess portion of the radiator plate and thus, the outgoing face of the point-like light source can illuminate the light guide plate equally. Similarly, even if the light guide plate is deformed by heat expansion or the like, the deformation is absorbed, displacement of the point-like light source is prevented, and bonding efficiency between the point-like light source and the light guide plate can be stably maintained.

### Advantages of the Invention

With the present invention configured as above, in the planar lighting device, workability of filling process of the filler for heat radiation can be improved, and heat generated from the point-like light source can be radiated efficiently so that higher brightness can be achieved.

### Brief Description of the Drawings

Figs. 1 are views illustrating a planar lighting device in a first embodiment of the present invention, in which Fig. 1(a) is a plan view and Fig. 1(b) is an A-A sectional view in Fig. 1(a);
Figs. 2 are views illustrating an essential part of a planar lighting device in a second embodiment of the present invention, in which Fig. 2(a) is a plan view and Fig. 2(b) is an A-A sectional view in Fig. 2(a);
Fig. 3 is a plan view illustrating a mode of a circuit board having an opening according to the present invention, in which Fig. 3(a) shows a case where the opening is a cutaway portion and Fig. 3(b) shows a case where the opening is a through hole;
Figs. 4 are views illustrating a configuration example of a conventional planar lighting device, in which Fig. 4(a) is a plan view and Fig. 4(b) is a side view; and
Fig. 5 is a sectional view illustrating a configuration example of a light source portion in the conventional planar lighting device.

### Reference Numerals

2: Light guide plate
3: Point-like light source
3b: Mounting face
4: Circuit board
5, 15: Radiator plate
5a, 15a: Plane portion
5b, 15b: Side wall
6: Filler for heat radiation
7, 17: Recess portion

### Best Mode for Carrying Out the Invention

An embodiment of the present invention will be described referring to the attached drawings, but each drawing is only for explanation and does not necessarily reflect the actual shape or dimensions of the invention accurately.

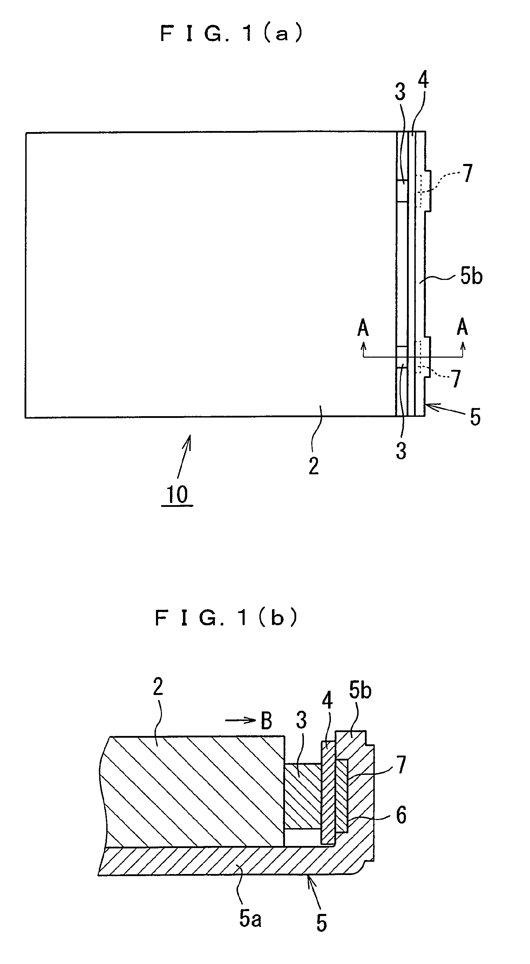

Fig. 1 is a view illustrating an essential part of a planar lighting device 10 in a first embodiment of the present invention, in which Fig. 1(a) is a plan view and Fig. 1(b) is an A-A sectional view. The planar lighting device 10 in this embodiment comprises a light guide plate 2, a point-like light source 3 mounted on a circuit board 4 and arranged on a side end face of the light guide plate 2, and a radiator plate 5 made of a planar portion 5a and a side wall 5b, the light guide plate 2 being mounted on the planar portion 5a of the radiator plate 5 and the circuit board 4 on which the LED 3 is mounted being fixed on the side wall 5b of the radiator plate 5.

Here, in this embodiment, the light guide plate 2 is a plate-state light guide body preferably formed by injection molding of a transparent resin such as acrylic resin, polycarbonate resin and the like, for example, and the point-like light source 3 is made of a white LED. The circuit board 4 is a so-called flexible printed circuit board (FPC) formed with a predetermined wiring pattern for supplying a driving current to the point-like light source on a flexible film base made of polyimide or the like and fixed to the side wall 5b by means such as of attachment or adhesive bonding.

Also, in this embodiment, the radiator plate 5 is preferably made of a metal material with excellent heat conductivity such as aluminum or the like and has the planar portion 5a on which the light guide plate 2 is mounted and the side wall 5b so as to form an L-shape in side view in the direction of the arrow shown in Fig. 1(b). At a position corresponding to the point-like light source 3 of the side wall 5b, a recess portion 7 is provided and by filling a filler 6 for heat radiation into this recess portion 7, the circuit board 4 and the radiator plate 5 are brought into close contact with each other on at least a back face portion of the point-like light source 3, and heat generated from the LED 3 is transferred to the radiator plate 5 with efficiency. At this time, the opening shape of the recess portion 7 is formed somewhat larger than the outline of the mounting face of the point-like light source 3 on the circuit board 4, and the filler 6 for heat radiation to be filled in the recess portion 7 is a filler of the type having considerable fluidity and not requiring subjection to drying and solidifying processes such as a silicon compound.

The light source portion of the planar lighting device 10 configured as above can be easily formed by applying an appropriate amount of the radiator filler 6 with a dispenser or the like into the recess portion 7 of the radiator plate 5 formed in an L-shape by press machining or the like and then, fixing the circuit board 4 on which the point-like light source 3 is mounted to the side wall 5b with a double-sided adhesive tape or the like, not shown. At this time, in the planar lighting device 10 in this embodiment, the application amount of the filler 6 for heat radiation can be determined easily and appropriately on the basis of the volume of the recess portion 7, and since the filler 6 for heat radiation after application is accommodated and held in the recess portion 7, the radiator plate 5 of the circuit board 4 before fixation can be easily managed and stored without transfer and adhesion of the filler 6 for heat radiation to other places.

Moreover, as mentioned above, the outline of the opening portion of the recess portion 7 into which the filler 6 for heat radiation with fluidity is filled is formed somewhat larger than the outline of the mounting face of the point-like light source 3 facing the circuit board 4, and since the circuit board 4 is an FPC having flexibility, the circuit board 4 is capable of flexural deformation into the recess portion 7 even after being fixed to the side wall 5b. Thus, even if there is variation in heights of the plurality of point-like light sources 3 mounted on the circuit board 4 from the circuit board or if the light guide plate 2 is deformed by heat expansion or the like in an arrow B direction shown in Fig. 1(b), the variation or deformation can be absorbed by flexural deformation of the circuit board 4 into the recess portion 7 and the point-like light source 3 can illuminate the light guide plate 2 stably and equally.

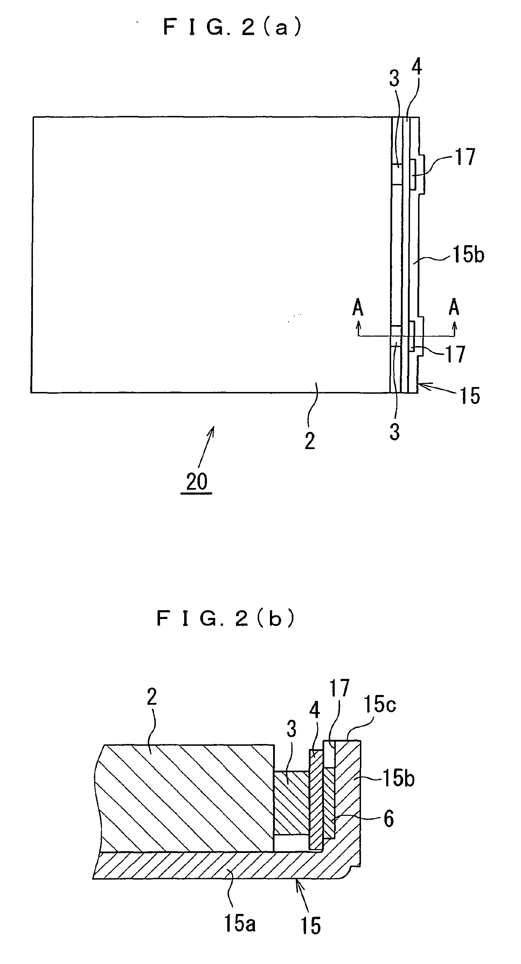

Next, a second embodiment of the present invention will be described referring to Fig. 2, but in the following description, the same components as those in the above-mentioned first embodiment are given the same reference numerals, and duplicated explanation will be omitted as appropriate.

Fig. 2 shows views illustrating an essential part of a planar lighting device 20 in the second embodiment of the present invention, in which Fig. 2(a) is a plan view and Fig. 2(b) is an A-A sectional view. The planar lighting device 20 in this embodiment has basically the same configuration as the planar lighting device 10 in the first embodiment, but they are different from each other in that the recess portion 17 in a side wall 15b of a radiator plate 15 is formed so as to reach an end portion 15c of the side wall 15b.

In the planar lighting device 20 configured as above, the light source portion can be easily formed by fixing the circuit board 4 on which the point-like light source 3 is mounted to the side wall 15b of the radiator plate 15 formed in an L-shape by press machining or the like with double-sided adhesive tape or the like, not shown, and then, by filling an appropriate amount of the filler 6 for heat radiation from the end portion 15c side of the recess portion 17, which is an open end, with a dispenser or the like. As above, in the planar lighting device 20, since the filling process of the filler 6 for heat radiation can be carried out by filling the filler 6 for heat radiation into a gap formed in advance between the recess portion of the side wall 15b and the circuit board 4, the appropriate filling amount can be further determined easily and surely. At the same time, since there is no face where the filler 6 for heat radiation is significantly exposed to the outside at the end of the filling process, management and storage after the work is further facilitated, and the workability of the filling process of the filler 6 for heat radiation can be further improved. Moreover, since the filling amount of the filler 6 for heat radiation can be determined easily and surely, the peripheral temperature of the point-like light source 3 and hence, its outgoing light amount can be individually adjusted by adjusting the amount for each of the point-like light sources 3.

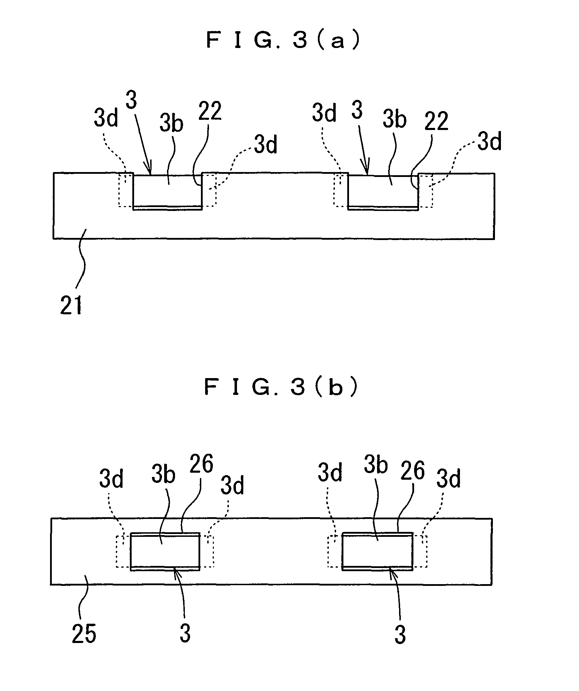

Here, in the planar lighting devices 10, 20 shown in Figs. 1 and 2, the circuit board 4 may have an opening in a region corresponding to at least a part of the mounting face of the point-like light source 3, with which the mounting face of the point-like light source 3 and the radiator plates 5, 15 are bonded not through the circuit board 4, contributing to the improvement of the radiation efficiency. The present invention is not limited to a specific mode of the opening provided in the circuit board 4, but as a circuit board 21 shown in Fig. 3(a), the opening may be a cutaway portion 22 corresponding to a portion of a mounting face 3b of the point-like light source 3 excluding an electrode portion 3d or a through hole 26 corresponding to the same portion as shown in Fig. 3(b), for example. In the planar lighting device according to the present invention, as mentioned above with reference to Figs. 1 and 2, the portion in the radiator plates 5, 15 corresponding to the mounting face 3b of the point-like light source 3 is not deleted as a through hole but continuously constructed of a metal material constituting the bottom face of the recess portions 7, 17, and heat transferred to the filler 6 for heat radiation in direct contact with the mounting face 3b of the point-like light source 3 can be advantageously radiated in a further efficient manner.

The preferred embodiments according to the present invention have been described but in the present invention, when flexural deformation of the circuit board on which the point-like light source is mounted is not applied, an adhesive filler to be solidified by drying can be used as the filler for heat radiation.

## Claims

1. A planar lighting device provided with a light guide plate and a point-like light source arranged on a side end face of the light guide plate, **characterized in that**
a radiator plate made of a bottom portion and a side wall is provided, a circuit board on which the point-like light source is mounted is fixed along the side wall, and a recess portion for holding a filler for heat radiation is formed at a position corresponding to the point-like light source in the side wall.

2. The planar lighting device according to claim 1, wherein the recess portion reaches an end of the side wall.

3. The planar lighting device according to claim 1 or 2, wherein the circuit board has an opening in a region corresponding to at least a part of a mounting face of the point-like light source.

4. The planar lighting device according to any one of claims 1 to 3, wherein the opening shape of the recess portion is formed somewhat larger than an outline of the mounting face of the point-like light source and the circuit board has flexibility.
